(19) **Europäisches Patentamt**

**European Patent Office**

**Office européen des brevets**

(11) Publication number: **0 307 965 B1**

(12) # EUROPEAN PATENT SPECIFICATION

(45) Date of publication of patent specification:
**29.05.91 Bulletin 91/22**

(51) Int. Cl.⁵: **B01D 19/00, F16K 17/00**

(21) Application number: **88115473.6**

(22) Date of filing: **21.09.88**

(54) **Integrated relief valve with gas separator for fluid.**

(30) Priority: **22.09.87 JP 236203/87**
**01.07.88 JP 162395/88**

(43) Date of publication of application:
**22.03.89 Bulletin 89/12**

(45) Publication of the grant of the patent:
**29.05.91 Bulletin 91/22**

(84) Designated Contracting States:
**DE FR GB**

(56) References cited:
**DE-A- 1 619 899**
**GB-A- 1 485 095**
**US-A- 4 548 622**

(72) Inventor: **Ihara, Hiroyuki**
**No. 1-3-23, Tarumachi**
**Kohoku-ku Yokohama-shi Kanagawa (JP)**
Inventor: **Yano, Hisashi No. 1019-233, Aza**
**Araisawa**
**Kudencho Sakae-ku**
**Yokohama-shi Kanagawa (JP)**
Inventor: **Umemoto, Etsuya**
**No. 2-9-20, Hiratsuka**
**Shinagawa-ku Tokyo (JP)**
Inventor: **Yabumoto, Junsuke**
**No. 48-8, Nakaechi**
**Atsugi-shi Kanagawa (JP)**

(74) Representative: **Füchsle, Klaus, Dipl.-Ing. et al**
**Hoffmann . Eitle & Partner Patentanwälte**
**Arabellastrasse 4**
**W-8000 München 81 (DE)**

(73) Proprietor: **Mitsubishi Oil Company, Limited**
**no. 2-4, Toranomon 1-chome**
**Minato-ku Tokyo (JP)**

## Description

### BACKGROUND OF THE INVENTION

In industrial applications requiring the handling of fluids such as water, lubricants, chemical solutions, liquid foodstuffs and so forth, often it is necessary to regulate the pressure of the fluid in order to prevent turbulent flow in the fluid to thereby prevent damage to machines using the fluid and to assure an adequate pressure so that the machines can work efficiently. For this purpose, it has been common practice to employ relief valves in fluid systems.

In order to prevent rust from forming and to prevent annoying noise in industrial water use, to prevent oil starvation in lubrication systems, to prevent inefficiency and inaccuracy in hydraulic systems and nonuniform quality in chemical or foodstuff materials, conventionally, devices employing buoyancy, vacuum and centrifugal force have been employed for removing gaseous contaminants, examples of which are disclosed in U.S. Patent No. 4, 548, 622, GB-A-1 144 833 and GB-A-1 485 095.

The buoyancy devices rely on gravity for their operation and must always be held upright in an environment free from large external centrifugal forces. The vacuum devices are often large and require a separate vacuum source. Centrifugal force devices are often either too large or too ineffective for some applications. These deficiencies in prior devices are particularly troublesome in the combustion engine field and, in particular, for oil filters for automobile and motor cycle engines. Automobiles and motorcycles cannot afford to devote a large amount of space, weight or power to a gas separator. The engine compartments are also subjected to external forces due to braking, accelerating and turning and irregularities in the road surface.

In addition, no compact and integrated device has heretofore been known, which is capable of simultaneously regulating fluid pressure and removing gaseous contaminants in a fluid. Such a device is particularly desirable though in the current engine manufacturing industries. Moreover, as the rotational speed and output of automobile and motorcycle engines have lately been increased, the importance of removing gaseous contaminants has increased. Excess gaseous contaminants in engine oil can cause serious problems, such as excess wear of lubricated parts due to oil starvation and a deterioration of the efficiency of the hydraulic valve lifters.

On the other hand, the space available inside the engine compartment is generally not sufficient to accommodate a gas separator. Hence, an integrated relief valve with the function of a gas separator is desired both from a standpoint of space and in terms of weight.

### SUMMARY OF THE INVENTION

Accordingly, an object of the present invention is to provide a small and integrated relief valve device comprising a circular cross section vortex flow chamber for a fluid with the function of separating gaseous contaminants in a fluid.

In accordance with the above and other objects, the invention provides a small and integrated relief valve device both for regulating fluid pressure and separating gaseous contaminants in a fluid in which a circular cross section vortex flow chamber for gas removal is combined with a pressure regulator for a fluid.

More specifically, the invention provides an integrated relief valve device for both regulating fluid pressure and removing gaseous contaminants in a fluid, comprising a wall defining a circular cross section vortex flow chamber having a plurality of small pores to permit a fluid stripped of gaseous contaminants to pass therethrough. The relief valve device additionally comprises a fluid introduction pipe for imposing a centrigufal force on a fluid by tangentially introducing a fluid into said circular cross section vortex flow chamber. A relief valve pipe is extending substantially throughout the whole axial length of said circular cross section vortex flow chamber into said circular cross section vortex flow chamber and is disposed substantially at an axial centre of said circular cross section vortex flow chamber having a plurality of small pores for allowing gas-rich fluid to pass therethrough. A relief valve is disposed in said relief valve pipe.

Walls are defining a fluid collecting chamber enclosing said circular cross section vortex flow chamber for receiving fluid flowing out through said pores in said circular cross section vortex flow chamber wall and having an opening through which said relief valve pipe exists, and outlet means for fluid collected in said fluid collecting chamber.

### BRIEF DESCRIPTION OF THE DRAWINGS

Fig. 1 is a cross-sectional view of an integrated relief valve device constructed according to the present invention ;

Fig. 2a is a cross-sectional view of second embodiment of an integrated relief valve device of the invention ;

Fig. 2b shows a cross section of the device of Fig. 2a taken along a line X-Y in Fig. 2a ;

Fig. 3 is a cross-sectional view of a third embodiment of the present invention ; and

Fig. 4 is a shematic diagram illustrating an example of an integrated relief valve device of the invention applied to an engine lubricating system.

## DESCRIPTION OF THE PREFERRED EMBODIMENTS

Referring to the accompanying drawings, preferred embodiments of the present invention will be described in detail.

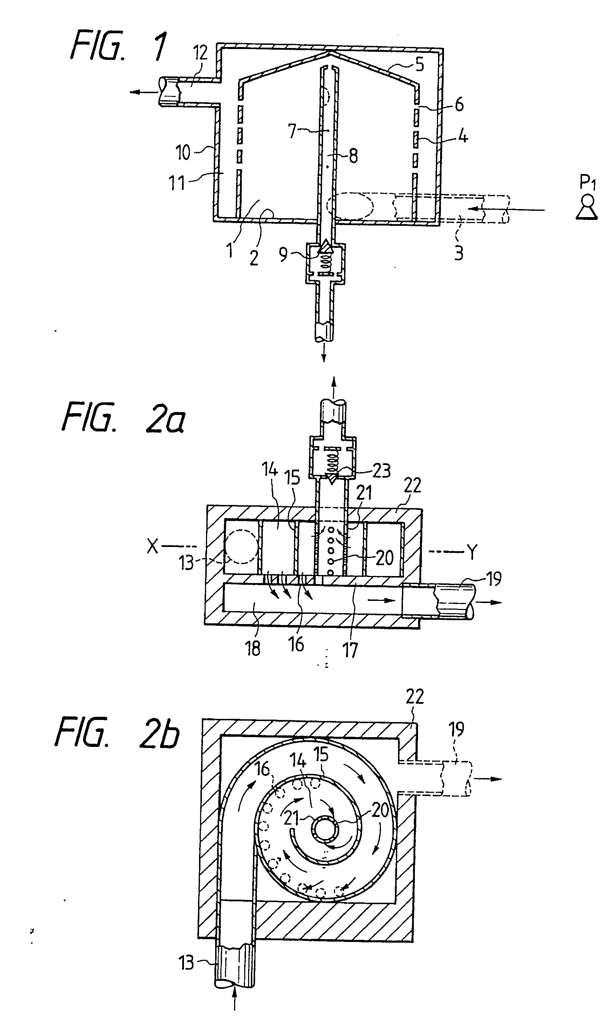

Fig. 1 shows a cross-sectional view of an integrated relief valve device for a four-cycle internal combustion engine constructed in accordance with the present invention.

An oil pump $P_1$, pumps out oil containing gaseous contaminants to a circular cross section vortex flow chamber 1. The oil flow is introduced tangentially into the circular cross section vortex flow chamber 1 near the bottom 2 through an inlet pipe 3. The circular cross section vortex flow chamber 1 has a cylindrical shape in its lower portion and a conical shape in its upper portion, the lower cylindrical portion being defined by a cylindrical wall 4 and the upper conical portion being defined by a conical wall 5. A portion of the oil flowing in a vortex pattern inside the cylindrical wall 4 flows out through small pores 6 formed in the cylindrical wall 4 and is collected in the oil collecting chamber 11 defined between the wall 10 and the vortex flow chamber 1. The collected oil flows out through the outlet pipe 12 formed in the wall 10 of the oil collecting chamber 11.

Due to the vortical flow of the oil in the circular cross section vortex flow chamber 1 and the resulting centrifugal force acting on the oil, oil containing gaseous contaminants collects near the axial center of the flow. The gas-rich oil moves radially inwardly through small pores 7 formed in a relief valve pipe 8 provided near the center of the device. The relief valve pipe 8 passes through the bottom 2 of the circular cross section vortex flow chamber 1. The gas-rich oil passes through the relief valve pipe 8 and the relief valve 9, which works by spring load.

Fig. 2a shows a cross-sectional view of a second embodiment of the present invention. The fluid pumped out by an oil pump is introduced to an inlet pipe 13 and subsequent to the circular cross section vortex flow chamber 14. The circular cross section vortex flow chamber 14 is defined by helical walls 15 which are reduced in diameter toward the center of the circular cross section vortex flow chamber 14. A portion of a fluid flowing in a helical vortex pattern inside the helical walls 15 flows out through the outlet holes 16 disposed at the bottom 17 of the circular cross section vortex flow chamber 14 near the helical walls 15.

The fluid flowing out through the outlet holes 16 collects in the collecting chamber 18 under the circular cross section vortex flow chamber 14 and then flows out through the outlet pipe 19.

Due to the helical and vortical flow of the fluid in the circular cross section vortex flow chamber 14 and the resulting centrifugal force acting on the fluid, fluid containing gaseous contaminants collects near the axial center of the flow. The gas-rich fluid moves radially inwardly through small pores 20 formed in a relief valve pipe 21 provided near the center of the device. The relief valve pipe 21 passes through the upper wall 22 of the circular cross section vortex flow chamber 14. The gas-rich fluid passes through the relief valve pipe 21 and the relief valve 23, which works by spring load.

Fig. 2b shows a cross sectional view of the device of Fig. 2a taken along a line X-Y in Fig. 2a, specifically showing the region of the helical circular cross section vortex flow chamber.

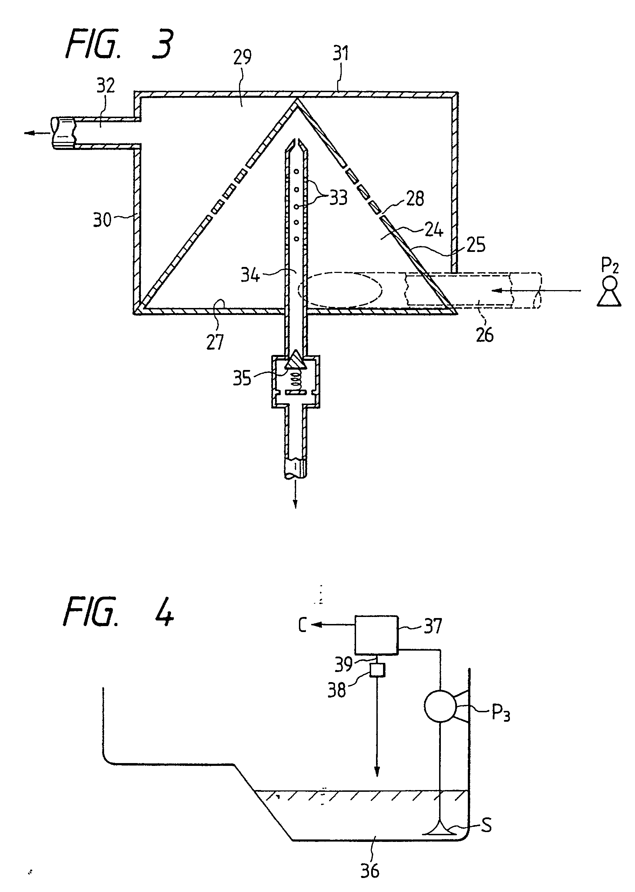

Fig. 3 shows a third embodiment of the present invention where the circular cross section vortex flow chamber 24 has a conical shape and the device is applied in a four-cycle motorcycle engine.

An oil pump $P_2$ pumps out oil containing gaseous contaminants to the device. The oil flow is introduced tangentially into the circular cross section vortex flow chamber 24 defined by a conical wall 25 through an inlet pipe 26 near at the bottom 27 of the circular cross section vortex flow chamber 24. Many small pores 28 are formed in the conical wall 25. A portion of the oil flowing in a vortical pattern inside the conical wall 25 flows out through the pores 28 into the collecting chamber 29 defined by the cylindrical wall 30 and the upper cover 31, and then flows out through the outlet pipe 32 debouching into the cylindrical wall 30 to lubricate engine parts.

Due to the vortical flow of the oil in the circular cross section vortex flow chamber 24 and the resulting centrifugal force acting on the oil, oil containing gaseous contaminants collects near the axial center of the flow. The gas-rich oil moves radially inwardly through small pores 33 formed in a relief valve pipe 34 provided near the center of the device. The relief valve pipe 34 passes through the bottom 27 of the circular cross section vortex flow chamber 24. The gas-rich oil flows out through the pipe 34 and then the relief valve 35.

Fig. 4 depicts schematically the connection of the device of Fig. 3 of the invention in a lubricating system of an engine.

Engine oil from an oil pan 36 is pumped by the oil pump $P_3$ through and oil screen S and supplied to the device 37 of the present invention. Engine oil stripped of gaseous contaminants by the device 37 is supplied to various parts C of an engine to be lubricated, and gas-rich oil is returned to the oil pan 36 through a relief valve 38 and relief valve pipe 39.

This completes the description of preferred embodiments of the invention.

## Claims

1. An integrated relief valve device for both regulating fluid pressure and removing gaseous contaminants in a fluid, comprising :

a wall (4 ; 5 ; 15 ; 25) defining a circular cross section vortex flow chamber (1 ; 14 ; 24) having a plurality of small pores (6 ; 28) to permit a fluid stripped of gaseous contaminants to pass therethrough ;

a fluid introduction pipe (3 ; 13 ; 26) for imposing a centrifugal force on a fluid by tangentially introducing a fluid into said circular cross section vortex flow chamber (1 ; 14 ; 24) ;

a relief valve pipe (8 ; 21 ; 34 ; 39) extending substantially throughout the whole axial length of said circular cross section vortex flow chamber into said circular cross section vortex flow chamber (1 ; 14 ; 24) and disposed substantially at an axial center of said circular cross section vortex flow chamber (1 ; 14 ; 24) having a plurality of small pores (7 ; 20 ; 28) for allowing gas-rich fluid to pass therethrough ;

a relief valve (9 ; 23 ; 35 ; 38) disposed in said relief valve pipe (8 ; 21 ; 34 ; 39) ;

walls (10 ; 17 ; 30 ; 31) defining a fluid collecting chamber (11 ; 18 ; 29) enclosing said circular cross section vortex flow chamber (1 ; 14 ; 24) for receiving fluid flowing out through said pores (6 ; 28) in said circular cross section vortex flow chamber wall (4, 5 ;15 ; 25) and having an opening through which said relief valve pipe exits, and outlet means (12 ; 19 ; 32) for fluid collected in said fluid collecting chamber (11 ; 18 ; 29).

2. The integrated relief valve device of claim 1, wherein said circular cross section vortex flow chamber (1 ; 14 ; 24) includes a cylindrical shaped portion.

3. The integrated relief valve device of claim 1 or 2, wherein said circular cross section vortex flow chamber (1 ; 14 ; 24) includes a conical shaped portion for increasing the centrifugal force acting on said fluid.

4. The integrated relief valve device of claim 1, wherein said circular cross section vortex flow chamber (14) includes a helical shaped portion.

5. The integrated relief valve device of claim 4, wherein said helical shaped circular cross section vortex flow chamber (14) is reduced in diameter from said introduction pipe to said outlet means for increasing the centrifugal force acting on said fluid.

**Ansprüche**

1. Integriertes Entlastungsventil zum Regeln eines Flüssigkeitsdruckes sowie zum Entfernen von gasförmigen Verunreinigungen in einer Flüssigkeit, umfassend :

eine Wand (4, 5, 15, 25), die eine Wirbelkammer (1, 14, 24) mit kreisförmigem Querschnitt festlegt und mehrere kleine Öffnungen (6, 28) aufweist, durch die eine Flüssigkeit strömen kann, von der gasförmige Verunreinigungen abgestreift worden sind ;

ein Flüssigkeitszulaufrohr (3, 13, 26), durch welches das Fluid einer Zentrifugalkraft unterworfen wird, indem dieses tangential in die Wirbelkammer mit kreisförmigem Querschnitt (1, 14, 24) eingeführt wird ;

ein Entlastungsventilrohr (8, 21, 34, 39), das sich im wesentlichen über die gesamte axiale Länge der Wirbelkammer mit kreisförmigem Querschnitt in die Wirbelkammer mit kreisförmigem Querschnitt (1, 14, 24) erstreckt und das im wesentlichen im axialen Mittelpunkt der Wirbelkammer mit kreisförmigem Querschnitt (1, 14, 24) angeordnet ist und mehrere kleine Öffnungen (7, 20, 28) aufweist, damit eine gasreiche Flüssigkeit durch dieses fließen kann ;

ein Entlastungsventil (9, 23, 35, 38), das in dem Entlastungsventilrohr (8, 21, 34, 39) angeordnet ist ;

Wände (10, 17, 30, 31), die eine Flüssigkeitssammelkammer (11, 18, 29) festlegen und die Wirbelkammer mit kreisförmigem Querschnitt (1, 14, 24) umschließen, um die Flüssigkeit aufzunehmen, die durch die kleinen Öffnungen (6, 28) in der Wand (4, 5, 15, 25) der Wirbelkammer mit kreisförmigem Querschnitt fließt und die eine Öffnung aufweisen, durch welche das Entlastungsventilrohr austritt ; sowie

eine Auslaßeinrichtung (12, 19, 32) für Flüssigkeit, die in der Flüssigkeitssammelkammer (11, 18, 29) gesammelt worden ist.

2. Integriertes Entlastungsventil nach Anspruch 1, dadurch **gekennzeichnet**, daß die Wirbelkammer mit kreisförmigem Querschnitt (1, 14, 24) einen zylindrisch geformten Abschnitt enthält.

3. Integriertes Entlastungsventil nach Anspruch 1 oder 2, dadurch **gekennzeichnet**, daß die Wirbelkammer mit kreisförmigem Querschnitt (1, 14, 24) einen konisch ausgebildeten Bereich enthält, um die auf die Flüssigkeit wirkende Zentrifugalkraft zu erhöhen.

4. Integriertes Entlastungsventil nach Anspruch 1, dadurch **gekennzeichnet**, daß die Wirbelkammer mit kreisförmigem Querschnitt (14) einen spiralförmigen Bereich enthält.

5. Integriertes Entlastungsventil nach Anspruch 4, dadurch **gekennzeichnet**, daß die spiralförmige Wirbelkammer mit kreisförmigem Querschnitt (14) sich in ihrem Durchmesser von dem Einlaßrohr zur Auslaßeinrichtung verkleinert, um die auf die Flüssigkeit wirkende Zentrifugalkraft zu erhöhen.

**Revendications**

1. Dispositif intégré à soupape de surpression servant à la fois à régler la pression du fluide et à éliminer les impuretés gazeuses contenues dans un fluide, qui comprend :

une paroi (4 ; 5 ; 15 ; 25) définissant une chambre de tourbillon à section circulaire (1 ; 14 ; 24) et qui présente une pluralité de petits pores (5 ; 28) pour laisser passer le fluide débarrassé des impuretés gazeuses ;

un tube d'introduction du fluide (3 ; 13 ; 26) servant à imposer une force centrifuge à un fluide en introduisant le fluide tangentiellement dans ladite chambre de tourbillon à section circulaire (1 ; 14 ; 24) ;

un tube de soupape de surpression (8 ; 21 ; 34 ; 39) qui s'étend sensiblement sur toute la longueur axiale de ladite chambre de tourbillon à section circulaire pour pénétrer dans ladite chambre de tourbillon à section circulaire (1 ; 14 ; 24), et disposé sensiblement selon l'axe de ladite chambre de tourbillon à section circulaire (1 ; 14 ; 24) possédant une pluralité de petits pores (7 ; 20 ; 28) qui laissent passer le fluide riche en gaz;

une soupape de surpression (9 ; 23 ; 35 ; 38) disposée dand ledit tube (8 ; 21 ; 34 ; 39) de la soupape de surpression ;

des parois (10 ; 17 ; 30 ; 31) définissant une chambre collectrice de fluide (11 ; 18 ; 29) qui entoure ladite chambre de tourbillon à section circulaire (1 ; 14 ; 24) pour recevoir le fluide qui sort à travers lesdits pores (6 ; 28) de ladite paroi (4, 5 ; 15 ; 25) de la chambre de tourbillon à section circulaire, et qui présente une ouverture à travers laquelle sort ledit tube de la soupape de surpression ; et

des moyens de sortie (12 ; 19 ; 32) pour le fluide qui a été collecté dans ladite chambre collectrice de fluide (11 ; 18 ; 29).

2. Dispositif intégré à soupape de surpression selon la revendication 1, dans lequel ladite chambre de tourbillon à section circulaire (1 ; 14 ; 24) comprend une partie de forme cylindrique.

3. Dispositif intégré à soupape de surpression selon la revendication 1 ou 2, dans lequel ladite chambre de tourbillon à section circulaire (1 ; 14 ; 24) comprend une partie de forme conique servant à renforcer la force centrifuge qui agit sur ledit fluide.

4. Dispositif intégré à soupape de surpression selon la revendication 1, dans lequel ladite chambre d'écoulement tourbillonnaire à section circulaire (14) comprend une portion de forme spirale.

5. Dispositif intégré à soupape de surpression selon la revendication 4, dans lequel ladite chambre d'écoulement tourbillonnaire à section circulaire (14) de forme spirale diminue de diamètre depuis le tube d'introduction jusqu'auxdits moyens de sortie, afin de renforcer la force centrifuge qui agit sur ledit fluide.

FIG. 1

FIG. 2a

FIG. 2b

## FIG. 3

## FIG. 4